(19) Europäisches Patentamt / European Patent Office / Office européen des brevets

(11) **EP 4 770 232 A1**

(12) **EUROPEAN PATENT APPLICATION**
published in accordance with Art. 153(4) EPC

(43) Date of publication:
01.07.2026 Bulletin 2026/27

(51) International Patent Classification (IPC):
*H04W 72/0446* (2023.01)

(21) Application number: 24878769.9

(22) Date of filing: 18.09.2024

(52) Cooperative Patent Classification (CPC):
H04W 72/044; H04W 72/0446; H04W 72/0453;
H04W 72/21

(86) International application number:
PCT/CN2024/119481

(87) International publication number:
WO 2025/082120 (24.04.2025 Gazette 2025/17)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.10.2023 CN 202311357517

(71) Applicant: HUAWEI TECHNOLOGIES CO., LTD.
Shenzhen 518129 (CN)

(72) Inventors:
• WANG, Xiaona
  Shenzhen, Guangdong 518129 (CN)
• FAN, Bo
  Shenzhen, Guangdong 518129 (CN)
• LIU, Fengwei
  Shenzhen, Guangdong 518129 (CN)

(74) Representative: Gill Jennings & Every LLP
The Broadgate Tower
20 Primrose Street
London EC2A 2ES (GB)

(54) **COMMUNICATION METHOD, AND APPARATUS**

(57) A communication method and apparatus relate to the field of communication technologies, to improve flexibility and efficiency of scheduling an antenna port combination for uplink transmission. The method includes: A network device sends a sounding reference signal SRS configuration message to a terminal, where the SRS configuration message includes N SRS resources, the N SRS resources include a first SRS resource and a second SRS resource, the first SRS resource includes one or more SRS ports, and the second SRS resource includes one or more SRS ports; and the network device receives an SRS corresponding to an $m^{th}$ SRS port of the first SRS resource and an SRS corresponding to an $n^{th}$ SRS port of the second SRS resource that are sent by the terminal through a same antenna port, where N, m, and n are positive integers.

| Network device | Terminal |
|---|---|
| 401: The network device sends an SRS configuration message to the terminal | |
| 402: The terminal receives the SRS configuration message, and sends an SRS on an SRS resource | |
| 403: The network device receives and measures the SRS signal, determines an uplink data port combination of the terminal, and sends first indication information to the terminal | |
| 404: The terminal sends uplink data to the network device based on the first indication information | |

FIG. 4

**Description**

This application claims priority to Chinese Patent Application No. 202311357517.1, filed with the China National Intellectual Property Administration on October 18, 2023 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

In wireless communication, uplink sounding reference signals (sounding reference signal, SRS) may be used for uplink channel state measurement. A network device may configure an SRS resource set for a terminal. The SRS resource set may include one or more SRS resources, and further include a mapping relationship between each SRS resource and a logical antenna port. After receiving the SRS resource set, the terminal may send an SRS on an SRS resource through a corresponding physical antenna port. For example, a quantity of physical antenna ports for simultaneous uplink sending by the terminal is x, and a quantity of physical antenna ports for simultaneous downlink receiving by the terminal is y. If x is less than y, the terminal may autonomously select x antenna ports from the y antenna ports to send the SRS.

Because the network device does not sense specific information of the physical antenna port autonomously selected by the terminal, the network device measures uplink channel state information based on only the received SRS signal, and considers by default that an antenna port used by the terminal to measure the uplink channel state information is the same as an antenna port used by the terminal to send uplink data, and that channel quality is the same.

However, uplink data transmission is scheduled by the network device. When selecting antenna ports for simultaneous uplink sending, the terminal selects an antenna port combination for uplink transmission based on only channel quality of the terminal, and cannot sense interference information between other users in a same network, inter-cell interference information, or the like. Therefore, the selected antenna port combination for uplink transmission may not be good in terms of comprehensive channel quality.

**SUMMARY**

Embodiments of this application provide a communication method and apparatus, to improve flexibility and efficiency of scheduling an antenna port combination for uplink transmission.

To achieve the foregoing objective, this application uses the following technical solutions.

According to a first aspect, a communication method is provided, and is applied to a network device, or a component (for example, a processor, a chip, or a chip system) in a network device, or a logical module or software that can implement all or a part of functions of a network device. The method includes: sending a sounding reference signal SRS configuration message to a terminal, where the SRS configuration message includes a first SRS resource and a second SRS resource, the first SRS resource includes one or more SRS ports, and the second SRS resource includes one or more SRS ports; and receiving an SRS corresponding to an $m^{th}$ SRS port of the first SRS resource and an SRS corresponding to an $n^{th}$ SRS port of the second SRS resource that are sent by the terminal through a same antenna port, where N, m, and n are positive integers.

In the foregoing implementation, the network device side configures a plurality of SRS resources for the terminal, so that channel state measurement information in a plurality of antenna port combinations can be obtained. In this way, intra-cell interference and inter-cell interference information of uplink scheduling of the terminal at the current moment can be comprehensively considered, and a more appropriate transmit antenna port combination can be selected for uplink transmission of the terminal, thereby improving transmission efficiency and scheduling flexibility.

In an implementation, the first SRS resource and the second SRS resource correspond to a same SRS resource set, or the first SRS resource and the second SRS resource correspond to different SRS resource sets with a same usage. In other words, the network device configures, for the terminal, a plurality of SRS resources with a same usage, so that the network device flexibly configures an antenna port combination for uplink scheduling for the terminal.

In an implementation, the usage of the SRS resource set is codebook-based uplink channel state measurement or beam management. In other words, the network device may configure at least one SRS resource set for the terminal, used for codebook-based uplink channel state measurement or beam management.

In an implementation, the $m^{th}$ SRS port and the $n^{th}$ SRS port occupy different time domain resources, and/or the $m^{th}$ SRS port and the $n^{th}$ SRS port occupy different frequency domain resources. In other words, different SRS resources configured by the network device for the terminal are associated with different antenna ports, that is, different antenna ports are configured with different SRS resources.

In an implementation, a relationship between a port index corresponding to the mth SRS port and a port index corresponding to the nth SRS port is one or more of the following: The port index corresponding to the mth SRS port is equal to the port index corresponding to the nth SRS port; or the mth SRS port corresponds to a largest port index in the first SRS resource, and the nth SRS port corresponds to a largest or smallest port index in the second SRS resource; or the mth SRS port corresponds to a smallest port index in the first SRS resource, and the nth SRS port corresponds to a smallest or largest port index in the second SRS resource.

In the foregoing implementation, in the plurality of SRS resources configured by the network device for the terminal, a part of SRS resources correspond to a same SRS port, so that the network device can estimate, based on SRS measurement and a random phase difference between signals sent at different moments, channel state measurement information corresponding to N2 antenna port combinations. In this way, the network device can determine, based on channel states of the N2 antenna port combinations, an antenna port combination used by the terminal for uplink data transmission.

For example, the first SRS resource and the second SRS resource include two SRS ports. A terminal antenna port associated with a first SRS port of the first SRS resource is the same as a terminal antenna port associated with a first SRS port of the second SRS resource, or a terminal antenna port associated with a first SRS port of the first SRS resource is the same as a terminal antenna port associated with a second SRS port of the second SRS resource, or a terminal antenna port associated with a second SRS port of the first SRS resource is the same as a terminal antenna port associated with a second SRS port of the second SRS resource, and the like. In other words, the terminal may send, through a part or all of same antenna ports, SRSs corresponding to the first SRS resource and the second SRS resource. For example, an SRS resource #0 includes two SRS ports, and a corresponding antenna port combination is (#1, #2), that is, corresponding port indexes are respectively 1 and 2; and an antenna port combination corresponding to an SRS resource #1 may be an antenna port combination (#2, #3), an antenna port combination (#1, #2), an antenna port combination (#1, #3), or an antenna port combination (#2, #4).

In an implementation, the SRS configuration message includes N SRS resources, and a specific value of N is one or more of the following: N=round up (y/x); or $N=C_y^x$, where $C_y^x$ indicates a quantity of combinations of any x ports selected from y ports; or N=round up (2*y/x-1); or N=N1, where N1 is a quantity of port combinations that are of x ports for sending an SRS signal and that are reported by the terminal device, x, y, and N1 are positive integers, N is less than or equal to $C_y^x$, and N1 is less than or equal to $C_y^x$.

In the foregoing implementation, a manner in which the network device configures the SRS resource for the terminal is flexible, so that the network device can obtain channel state measurement information in a plurality of antenna port combinations based on an SRS measurement result, to select a transmit antenna port combination for uplink transmission for the terminal based on comprehensive consideration, thereby improving transmission efficiency and scheduling flexibility. For example, a terminal capability is 2T4R, x is 2, and y is 4. The quantity N of SRS resources that may be configured by the network device for the terminal may be N=(y/x)=2, or N=(2*y/x-1)=3, or $N=C_y^x=6$, or a quantity N1 (N1 is less than 6) of antenna port combinations supported by the terminal.

In an implementation, x is a quantity of ports supported by the terminal device for uplink SRS sending, y is a quantity of ports supported by the terminal device for downlink receiving, x and y are positive integers, and x is less than or equal to y.

In an implementation, the method further includes: receiving SRSs corresponding to the N SRS resources, to obtain channel state measurement information of x1 SRS ports, where x1 is greater than or equal to x, and x1 is less than or equal to y.

In an implementation, the method further includes: obtaining, based on the channel state measurement information of the x1 SRS ports, channel state measurement information corresponding to N2 SRS port combinations, where each SRS port combination include x SRS ports, and N2 is greater than or equal to N and less than or equal to $C_y^x$. The network device configures a plurality of SRS resources for the terminal, so that the network device can estimate channel state measurement information of the x1 SRS ports based on SRS measurement and a random phase difference between signals sent at different moments. In this way, the network device can further estimate channel states of the N2 antenna port combinations, to determine an antenna port combination used by the terminal for uplink data transmission.

For example, a terminal capability is 2T4R, x is 2, y is 4, and the network device configures three SRS resources for the terminal. The three SRS resources include at least two SRS resources corresponding to a part of same port indexes. For example, port indexes corresponding to the three SRS resources are respectively (#2, #3), (#1, #2), and (#3, #4), so that the network device can obtain, through measurement and estimation based on a plurality of received SRSs, channel state information of four SRS ports (#1, #2, #3, and #4), and further obtain channel states of N2=6 antenna port combinations, including measured channel states of antenna port combinations (#2, #3), (#1, #2), and (#3, #4), and estimated channel states of (#1, #3), (#1, #4), and (#2, #4), and determine, from the channel states, an antenna port combination used by the terminal for uplink data transmission.

For another example, a terminal capability is 2T4R, port indexes corresponding to the SRS resources configured by the network device for the terminal may alternatively be (#1, #2), (#1, #3), and (#1, #4), or (#1, #4), (#2, #4), and (#3, #4), or a combination of (#1, #3), (#1, #4), (#2, #3), and (#2, #4), or the like.

In an implementation, the method further includes: sending first indication information to the terminal, to indicate an antenna port combination used for sending uplink data.

In the foregoing implementation, the network device may indicate, to the terminal by using the first indication information, the determined antenna port combination for uplink transmission, so that transmission efficiency and scheduling flexibility can be improved.

In an implementation, the first indication information includes a first SRS port combination in the N2 SRS port combinations, to indicate the terminal to send the uplink data through an antenna port same as the first SRS port combination; or the first indication information includes x port indications of the x1 SRS ports, to indicate the terminal to send the uplink data through antenna ports corresponding to the x port indications, N2 is greater than or equal to N and less than or equal to $C_y^x$, x1 and x are positive integers, and x1 is greater than or equal to x.

In the foregoing implementation, the antenna port combination for uplink transmission may be indicated to the terminal by using the first indication information indicating the SRS port combination, or the used antenna port combination for uplink transmission may be indicated by indicating x ports in the x1 SRS ports. An indication manner is flexible and signaling overheads are low.

According to a second aspect, a communication method is provided, and is applied to a terminal, or a component (for example, a processor, a chip, or a chip system) in a terminal, or is performed by a logical module or software that can implement all or a part of functions of a terminal. The method includes: receiving an SRS configuration message, where the SRS configuration message includes a first SRS resource and a second SRS resource, the first SRS resource includes one or more SRS ports, and the second SRS resource includes one or more SRS ports; and sending, through a same antenna port, an SRS corresponding to an $m^{th}$ SRS port of the first SRS resource and an SRS corresponding to an $n^{th}$ SRS port of the second SRS resource, where N, m, and n are positive integers.

In an implementation, the first SRS resource and the second SRS resource correspond to a same SRS resource set, or the first SRS resource and the second SRS resource correspond to different SRS resource sets with a same usage.

In an implementation, the usage of the SRS resource set is codebook-based uplink channel state measurement or beam management.

In an implementation, the $m^{th}$ SRS port and the $n^{th}$ SRS port occupy different time domain resources, and/or the $m^{th}$ SRS port and the $n^{th}$ SRS port occupy different frequency domain resources.

In an implementation, a relationship between a port index corresponding to the $m^{th}$ SRS port and a port index corresponding to the $n^{th}$ SRS port is one or more of the following: The port index corresponding to the $m^{th}$ SRS port is equal to the port index corresponding to the $n^{th}$ SRS port; or the $m^{th}$ SRS port corresponds to a largest port index in the first SRS resource, and the $n^{th}$ SRS port corresponds to a largest or smallest port index in the second SRS resource; or the $m^{th}$ SRS port corresponds to a smallest port index in the first SRS resource, and the $n^{th}$ SRS port corresponds to a smallest or largest port index in the second SRS resource.

In an implementation, the SRS configuration message includes N SRS resources, and a specific value of N is one or more of the following: N=round up (y/x); or $N=C_y^x$, where $C_y^x$ indicates a quantity of combinations of any x ports selected from y ports; or N=round up (2*y/x-1); or N=N1, where N1 is a quantity of port combinations that are of x ports for sending an SRS signal and that are reported by the terminal device, x, y, and N1 are positive integers, N is less than or equal to $C_y^x$, and N1 is less than or equal to $C_y^x$.

In an implementation, x is a quantity of ports supported by the terminal device for uplink SRS sending, y is a quantity of ports supported by the terminal device for downlink receiving, x and y are positive integers, and x is less than or equal to y.

In an implementation, the method includes: sending SRSs corresponding to the N SRS resources, where the SRSs corresponding to the N SRS resources are used by a network device to obtain, based on the received SRSs, channel state measurement information corresponding to N2 SRS port combinations, and indicate, to the terminal, an antenna port combination for sending uplink data, each SRS port combination includes x SRS ports, and N2 is greater than or equal to N and less than or equal to $C_y^x$.

In an implementation, the method further includes: receiving first indication information from the network device, to indicate the antenna port combination used for sending the uplink data; and sending the uplink data based on the first indication information.

In an implementation, the first indication information includes a first SRS port combination in the N2 SRS port combinations, to indicate the terminal to send the uplink data through an antenna port same as the first SRS port combination; or the first indication information includes x port indications of the x1 SRS ports, to indicate the terminal to send the uplink data through antenna ports corresponding to the x port indications, N2 is greater than or equal to N and less than or equal to $C_y^x$, x1 and x are positive integers, and x1 is greater than or equal to x.

According to a third aspect, a communication apparatus is provided, to implement the foregoing methods. The communication apparatus may be the network device in the first aspect, or an apparatus including the network device, or a module in the network device in the first aspect, for example, a chip, a chip system, or a circuit, or a logical node, a logical module, or software that can implement a part or all of functions of the network device.

Alternatively, the communication apparatus may be the terminal in the second aspect, or an apparatus including the terminal, or a module in the terminal in the second aspect, for example, a chip, a chip system, or a circuit, or a logical node, a logical module, or software that can implement a part or all of functions of the terminal.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the third aspect, in a possible implementation, the communication apparatus may include a processing module and a transceiver module. The processing module may be configured to implement a processing function in any one of the foregoing aspects and the possible implementations of the foregoing aspects. The processing module may be, for example, a processor. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface.

With reference to the third aspect, in a possible implementation, the transceiver module includes a sending module and a receiving module, which are respectively configured to implement the sending function and the receiving function in any one of the foregoing aspects and the possible implementations of the foregoing aspects.

According to a fourth aspect, a communication apparatus is provided, and includes a processor. The processor is configured to: be coupled to a memory, and after reading instructions in the memory, perform the method according to any one of the foregoing aspects based on the instructions. The communication apparatus may be the network device in any one of the first aspect and the possible implementations of the first aspect, or an apparatus including the network device, or a module in the network device, for example, a chip, a chip system, or a circuit, or a logical node, a logical module, or software that can implement a part or all of functions of the network device.

Alternatively, the communication apparatus may be the terminal in any one of the second aspect and the possible implementations of the second aspect, or an apparatus including the terminal, or a module in the terminal, for example, a chip, a chip system, or a circuit, or a logical node, a logical module, or software that can implement a part or all of functions of the terminal.

With reference to the fourth aspect, in a possible implementation, the communication apparatus further includes a memory. The memory is configured to store necessary program instructions and data.

With reference to the fourth aspect, in a possible implementation, the communication apparatus is a chip or a chip system. Optionally, when the communication apparatus is the chip system, the communication apparatus may include a chip, or may include a chip and another discrete component.

With reference to the fourth aspect, in a possible implementation, the communication apparatus further includes an interface circuit, the interface circuit may be implemented by using a transceiver or another apparatus that can implement communication, and the processor may be configured to control the transceiver to receive or send a signal.

According to a fifth aspect, a communication apparatus is provided, and includes a processor and an interface circuit. The interface circuit is configured to: receive a computer program or instructions, and transmit the computer program or the instructions to the processor. The processor is configured to execute the computer program or the instructions, to enable the communication apparatus to perform the method according to any one of the foregoing aspects. The communication apparatus may be the network device in any one of the first aspect and the possible implementations of the first aspect, or an apparatus including the network device, or a module in the network device, for example, a chip, a chip system, or a circuit, or a logical node, a logical module, or software that can implement a part or all of functions of the network device.

Alternatively, the communication apparatus may be the terminal in any one of the second aspect and the possible implementations of the second aspect, or an apparatus including the terminal, or a module in the terminal, for example, a chip, a chip system, or a circuit, or a logical node, a logical module, or software that can implement a part or all of functions of the terminal.

With reference to the fifth aspect, in a possible implementation, the communication apparatus is a chip or a chip system. Optionally, when the communication apparatus is the chip system, the communication apparatus may include a chip, or may include a chip and another discrete component.

With reference to the fifth aspect, in a possible implementation, the interface circuit may be implemented by using a pin, a radio frequency module, a transceiver, or any apparatus that can implement communication. The processor is configured to control the interface circuit to receive or send a signal.

According to a sixth aspect, a computer-readable storage medium is provided. The computer-readable storage medium stores instructions, and when the instructions are run on a computer, the computer is enabled to perform the method according to any one of the foregoing aspects.

According to a seventh aspect, a computer program product including instructions is provided. When the computer program product is run on a computer, the computer is enabled to perform the method according to any one of the foregoing aspects.

According to an eighth aspect, a communication system is provided. The communication system includes a network device configured to perform the method according to any one of the first aspect and the possible implementations of the first aspect, and a terminal configured to perform the method according to any one of the second aspect and the possible implementations of the second aspect.

For technical effects brought by any one of the possible implementations of the second aspect to the eighth aspect, refer to technical effects brought by any possible implementation of the first aspect. Details are not described herein again.

It may be understood that the solutions in the foregoing aspects may be combined if the solutions are not contradictory.

## BRIEF DESCRIPTION OF DRAWINGS

FIG. 1 is a diagram of a communication method according to an embodiment of this application;
FIG. 2 is a diagram of a structure of a communication system according to an embodiment of this application;
FIG. 3 is a diagram of a structure of a communication apparatus according to an embodiment of this application;
FIG. 4 is a schematic flowchart of a communication method according to an embodiment of this application;
FIG. 5 is a diagram of a port combination for uplink signal sending by a terminal according to an embodiment of this application;
FIG. 6 is a diagram of another port combination for uplink signal sending by a terminal according to an embodiment of this application;
FIG. 7 is a diagram of another port combination for uplink signal sending by a terminal according to an embodiment of this application;
FIG. 8 is a diagram of a mapping relationship between an SRS port and a physical antenna according to an embodiment of this application;
FIG. 9 is a diagram of an SRS resource configuration according to an embodiment of this application;
FIG. 10 is a diagram of a communication apparatus according to an embodiment of this application;
FIG. 11 is a diagram of another communication apparatus according to an embodiment of this application; and
FIG. 12 is a diagram of another communication apparatus according to an embodiment of this application.

## DESCRIPTION OF EMBODIMENTS

The following describes the technical solutions in embodiments of this application with reference to the accompanying drawings in embodiments of this application. It is clear that the described embodiments are merely a part rather than all of embodiments of this application.

Terms "first" and "second" mentioned below are merely intended for a purpose of description, and shall not be understood as an indication or implication of relative importance or implicit indication of a quantity of indicated technical features. Therefore, a feature limited by "first", "second", or the like may explicitly or implicitly include one or more features.

In this application, unless otherwise clearly specified and limited, the term "connection" should be understood in a broad sense. For example, the "connection" may be a fixed connection, a detachable connection, an integration, a direct connection, or an indirect connection via an intermediate medium.

In this application, "sending information to... (a terminal)" may be understood as that a destination end of the information is the terminal, and may include directly or indirectly sending the information to the terminal. "Receiving information from... (a terminal)" may be understood as that a source end of the information is the terminal, and may include directly or indirectly receiving the information from the terminal. Information may undergo necessary processing, for example, a format change, between the source end for sending the information and the destination end. However, the destination end may understand valid information from the source end. Similar descriptions in this application may be construed in a similar manner, and details are not described herein again.

First, technical terms in this application are briefly described.

A beam is a directional electromagnetic wave transmitted by an antenna of a communication apparatus. In the field of wireless communication, the beam may be represented by using a spatial domain filter (spatial domain filter), or referred to as a spatial filter (spatial filter), or referred to as a spatial domain parameter (spatial domain parameter), a spatial parameter (spatial parameter), a spatial domain setting (spatial domain setting), a spatial setting (spatial setting), quasi-colocation (Quasi-colocation, QCL) information, a QCL assumption, a QCL indication, or the like. Therefore, the beam may be indicated by using a transmission configuration indicator state (TCI-state) parameter, or the beam may be indicated by using a spatial relation (spatial relation) parameter.

A beam used to send a signal may be referred to as a transmission beam (transmission beam, Tx beam), or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). The transmission beam may refer to signal strength distribution formed in different directions in space after a signal is transmitted through an antenna.

A beam used to receive a signal may be referred to as a reception beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). The reception beam may refer to signal strength distribution, in different directions in space, of a radio signal received through an antenna.

A downlink transmission beam may be indicated by using a TCI-state, and an uplink transmission beam may be indicated by using a spatial relation (spatial relation), an uplink transmission configuration indicator state (Transmission Configuration Indicator state, TCI-state), or an SRS resource (representing a transmission beam using the SRS). Therefore, the uplink beam may be alternatively represented as an SRS resource.

In addition, the beam may be a wide beam, a narrow beam, or a beam of another type. A beam forming technology may be a beamforming technology or another technology. The beamforming technology may be specifically a digital beamforming technology, an analog beamforming technology, a hybrid digital/analog beamforming technology, or the like. This is not specifically limited in this application.

The beam usually corresponds to a resource. For example, during beam measurement, a network device measures different beams by using different resources, a terminal device feeds back measured resource quality, and then the network device learns quality of a corresponding beam. During data transmission, beam information is also indicated by using a resource corresponding to the beam information. For example, the network device indicates beam information of a physical downlink shared channel (Physical Downlink Shared Channel, PDSCH) to the terminal device by using a transmission configuration indicator (Transmission Configuration Indicator, TCI) field in downlink control information (Downlink Control Information, DCI).

Optionally, a plurality of beams having same or similar communication features may be considered as one beam. One beam may include one or more antenna ports, configured to transmit a data channel, a control channel, a sounding signal, and the like. One or more antenna ports forming the beam may also be considered as one antenna port combination.

In embodiments of this application, unless otherwise specified, the beam is a transmission beam of the network device. During beam measurement, each beam of the network device corresponds to one resource. Therefore, an index of the resource can be used for uniquely identifying a beam corresponding to the resource.

In an existing wireless communication protocol, an SRS may be used to obtain uplink channel state information (channel state information, CSI) transmitted based on a codebook or a non-codebook. The network device may allocate an SRS resource configuration to the terminal, including an SRS resource set (Resource Set) and an SRS resource (Resource). For codebook-based uplink data transmission measurement, when there is one transmission node serving a user, the network device may configure a maximum of one SRS resource set for each user; or when there are two transmission nodes serving a user, the network device may configure a maximum of two SRS resource sets for each user, where one or more SRS resources may be configured in each SRS resource set.

In addition, for the terminal, a capability parameter of the terminal includes "supportedSRS-xTyR", to indicate a quantity of antenna ports for sending and receiving SRSs supported by the terminal, x indicates a total quantity of antenna ports for simultaneously sending signals by the terminal, and y indicates a total quantity of antenna ports for simultaneously receiving signals by the terminal, where x and y are positive integers, and y≥x. In other words, x may be understood as a quantity of antenna ports through which the terminal can simultaneously perform an uplink sending behavior, and y may be understood as a total quantity of antenna ports through which the terminal can perform an uplink sending behavior. The terminal may select x antenna ports from the y antenna ports to send the SRS.

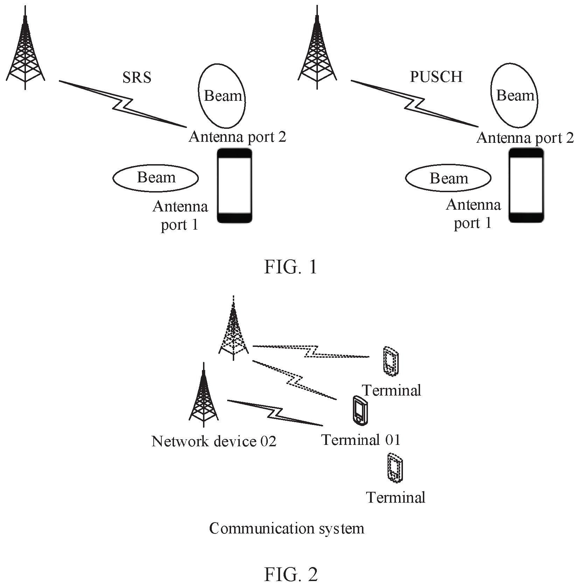

Based on an existing protocol definition, the network device does not sense specific antenna port information selected by the terminal, and measures uplink channel state information based on only a received SRS signal. In addition, the network device considers by default that an antenna port used by the terminal to measure the uplink channel state information is the same as an antenna port for sending uplink data. For example, as shown in FIG. 1, the terminal selects an antenna port 1 and an antenna port 2 from y antenna ports to send an SRS, and subsequently the terminal sends a physical uplink shared channel (Physical uplink shared channel, PUSCH) through the antenna port 1 and the antenna port 2.

Because uplink data transmission of the terminal is specifically scheduled by the network device side, when selecting antenna ports for simultaneous uplink sending, the terminal does not learn possible intra-cell paired user and inter-cell interference information, and the like for subsequent uplink data transmission. As a result, an antenna port combination selected by the terminal for uplink data transmission may not be good in terms of comprehensive channel quality.

Based on the foregoing problem, an implementation solution of this application provides an SRS measurement method based on selection of an antenna port for uplink data transmission on a network device side. In this solution, the network device side may obtain channel state information of all antenna port combinations for simultaneous uplink sending, to dynamically select proper antenna ports for simultaneous uplink sending for a user based on a real-time uplink data transmission scheduling requirement, thereby improving flexibility and efficiency of uplink transmission scheduling.

The following briefly describes an implementation environment and an application scenario of embodiments of this application with reference to the accompanying drawings.

This application may be applied to an existing fifth-generation (the fifth-generation, 5G) mobile communication technology, a next-generation (Next Generation, NG) mobile communication technology, or a future new wireless technology, or may be applied to any other wireless communication system having a similar structure and function. As shown in FIG. 2, the communication system includes at least one terminal 01 and at least one network device 02. A single network device may transmit data or control signaling to one or more terminals, or a plurality of network devices may simultaneously transmit data, control signaling, or the like to a single terminal.

The terminal 01 in embodiments of this application may be user equipment (user equipment, UE), and may include various handheld devices, vehicle-mounted devices, wearable devices, or compute devices that have a wireless communication function, or other processing devices connected to a wireless modem. The terminal may be a mobile station (Mobile Station, MS), a subscriber unit (subscriber unit), a cellular phone (cellular phone), a smartphone (smartphone), a wireless data card, a personal digital assistant (Personal Digital Assistant, PDA for short) computer, a tablet computer, a wireless modem (modem), a handheld device (handset), a laptop computer (laptop computer), a machine type communication (Machine Type Communication, MTC) terminal, or the like.

In this embodiment of this application, an apparatus configured to implement a function of a terminal may be a terminal; or may be an apparatus, for example, a chip system, that can support the terminal in implementing the function. The apparatus may be installed in the terminal. In this embodiment of this application, the chip system may include a chip, or may include a chip and another discrete component. In the technical solutions provided in embodiments of this application, an example in which an apparatus configured to implement a function of the terminal device is UE is used for describing the technical solutions provided in embodiments of this application.

The network device 02 in embodiments of this application may be an apparatus that is deployed in a radio access network and that provides a wireless communication function for the terminal device. The network device may include various forms of macro base stations, micro base stations (also referred to as small cells), relay stations, access points, and the like. In systems using different radio access technologies, names of the network device may vary, for example, may be a base transceiver station (Base Transceiver Station, BTS) in a global system for mobile communications (Global System for Mobile Communications, GSM) or code division multiple access (Code Division Multiple Access, CDMA) network, an NB (NodeB) in wideband code division multiple access (Wideband Code Division Multiple Access, WCDMA), or an eNB or eNodeB (Evolved NodeB) in long term evolution (Long Term Evolution, LTE). The network device may alternatively be a radio controller in a cloud radio access network (Cloud Radio Access Network, CRAN) scenario. The network device may alternatively be a base station device in a 5G network or a network device in a future evolved public land mobile network (Public Land Mobile Network, PLMN). The network device may alternatively be a wearable device or a vehicle-mounted device, or may be an access node in an open access network (open RAN, O-RAN, or ORAN), a CRAN, or a wireless fidelity (wireless fidelity, Wi-Fi) system. Alternatively, the network device may be a transmission and reception point (Transmission and Reception Point, TRP).

The base station may be in a plurality of forms, for example, a macro base station, a micro base station, a relay station, and an access point. For example, the base station in embodiments of this application may be a base station in 5G or a base station in LTE. The base station in 5G may also be referred to as a transmission reception point (transmission reception point, TRP) or a next-generation NodeB (next-generation NodeB, gNB).

In another possible scenario, a plurality of access nodes may cooperate to assist the terminal in implementing radio access, and different access nodes separately implement a part of functions of the base station. For example, the access node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an open CU (open-CU, O-CU), the DU may also be referred to as an open DU (open-DU, O-DU), the CU-CP may also be referred to as an open CU-CP (open-CU-CP, O-CU-CP), the CU-UP may also be referred to as an open CU-UP (open CU-UP, O-CU-UP), and the RU may also be referred to as an open (open-RU, O-RU). For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, an apparatus configured to implement a function of the network device may be a network device; or may be an apparatus, for example, a chip system, that can support the network device in implementing the function. The apparatus may be installed in the network device.

In the technical solutions provided in embodiments of this application, an example in which an apparatus configured to implement a function of the network device is a network device, and the network device is a base station is used for describing the technical solutions provided in embodiments of this application.

The technical solutions provided in embodiments of this application may be applied to wireless communication between the network device and the terminal device. In embodiments of this application, the term "wireless communication" may also be referred to as "communication" for short, and the term "communication" may also be described as "data transmission", "information transmission", or "transmission".

It should be noted that FIG. 2 is merely an example framework diagram, and a quantity of network element nodes included in FIG. 2 is not limited. In addition to functional nodes shown in FIG. 2, other nodes such as a core network device, a gateway device, and an application server may be further included. This is not limited. An access network device and a core network device communicate with each other through a wired network or a wireless network, for example, communicate with each other through an NG interface.

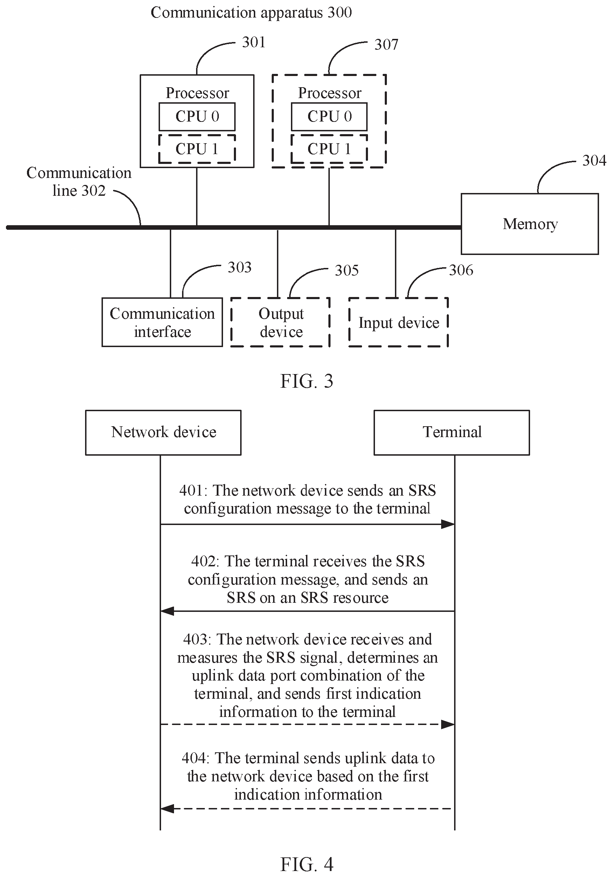

During specific implementation, the network elements shown in FIG. 2, for example, the terminal and the network device, may use a composition structure shown in FIG. 3 or include components shown in FIG. 3. FIG. 3 is a diagram of a structure of a communication apparatus 300 according to an embodiment of this application. When the communication apparatus 300 has a function of the terminal device in embodiments of this application, the communication apparatus 300 may be a terminal, or a chip or a system-on-a-chip in a terminal. When the communication apparatus 300 has a function of the network device described in embodiments of this application, the communication apparatus 300 may be a network device, or a chip or a system-on-a-chip in the network device.

As shown in FIG. 3, the communication apparatus 300 may include a processor 301, a communication line 302, and a communication interface 303. Further, the communication apparatus 300 may further include a memory 304. The processor 301, the memory 304, and the communication interface 303 may be connected to each other through the communication line 302.

The processor 301 may be a central processing unit (Central Processing Unit, CPU), a general-purpose processor, a network processor (Network Processor, NP), a digital signal processor (Digital Signal Processor, DSP), a microprocessor, a microcontroller, a programmable logic device, or any combination thereof. The processor 301 may alternatively be another apparatus having a processing function, for example, a circuit, a component, or a software module.

The communication line 302 is configured to transmit information between the components included in the communication apparatus 300.

The communication interface 303 is configured to communicate with another device or another communication network. The another communication network may be the Ethernet, a radio access network (Radio Access Network, RAN), a wireless local area network (Wireless Local Area Network, WLAN), or the like. The communication interface 303 may be an interface circuit, a pin, a radio frequency module, a transceiver, or any apparatus that can implement communication.

The memory 304 is configured to store instructions. The instructions may be a computer program.

The memory 304 may be a read-only memory (Read-only Memory, ROM) or another type of static storage device that can store static information and/or instructions; may be a random access memory (Random Access Memory, RAM) or another type of dynamic storage device that can store information and/or instructions; or may be an electrically erasable programmable read-only memory (Electrically Erasable Programmable read-only Memory, EEPROM), a compact disc read-only memory (Compact Disc read-only Memory, CD-ROM) or another optical disc storage, an optical disc storage, a magnetic disk storage medium, or another magnetic storage device. The optical disc storage includes a compact optical disc, a laser disc, an optical disc, a digital versatile disc, a Blu-ray disc, or the like.

It should be noted that the memory 304 may exist independently of the processor 301, or may be integrated with the processor 301. The memory 304 may be configured to store the instructions, program code, some data, or the like. The memory 304 may be located inside the communication apparatus 300, or may be located outside the communication apparatus 300. This is not limited. The processor 301 is configured to execute the instructions stored in the memory 304, to perform a method provided in the following embodiment of this application.

In an example, the processor 301 may include one or more CPUs, for example, a CPU 0 and a CPU 1 in FIG. 3.

In an optional implementation, the communication apparatus 300 includes a plurality of processors. For example, in addition to the processor 301 in FIG. 3, the communication apparatus 300 may further include a processor 307.

In an optional implementation, the communication apparatus 300 further includes an output device 305 and an input device 306. For example, the input device 306 is a device such as a keyboard, a mouse, a microphone, or a joystick, and the output device 305 is a device such as a display or a speaker.

It should be noted that the communication apparatus 300 may be a wearable device, a desktop computer, a portable computer, a network server, a mobile phone, a tablet computer, a wireless terminal, an embedded device, a chip system, or a device having a structure similar to that in FIG. 3. In addition, the composition structure shown in FIG. 3 does not constitute a limitation on the communication apparatus. In addition to the components shown in FIG. 3, the communication apparatus may include more or fewer components than the components shown in the figure, or some components may be combined, or there may be a different component arrangement.

In this embodiment of this application, the chip system may include a chip, or may include a chip and another discrete component.

The following describes embodiments of this application with reference to corresponding accompanying drawings.

As shown in FIG. 4, a communication method provided in this application may include the following steps.

401: A network device sends an SRS configuration message to a terminal.

The SRS configuration message includes N SRS resources, for the terminal side to send an SRS on the N SRS resources. N may be a positive integer greater than 1, the N SRS resources may include a first SRS resource and a second SRS resource, the first SRS resource includes one or more SRS ports, and the second SRS resource includes one or more SRS ports.

In an implementation, the network device may configure one SRS resource set for a user, or the network device may configure one SRS resource set for each serving TRP of the user. Each SRS resource set may include the N SRS resources. Each SRS resource may be configured with x SRS ports, to indicate that each SRS resource is used by the terminal side to simultaneously send SRSs to the network device through the x antenna ports.

In a specific implementation, the SRS configuration message may include a mapping relationship between each SRS resource and the x SRS ports. For example, an SRS resource #1 may be associated with two SRS ports: an SRS port #1 and an SRS port #2.

It should be noted that the N SRS resources included in the SRS configuration message in this application are used for codebook-based uplink channel state measurement or beam management. The SRS configuration message may further include a usage indication corresponding to the SRS resource. The first SRS resource and the second SRS resource may correspond to a same SRS resource set, and a usage of the SRS resource set is codebook-based uplink channel state measurement or beam management. Alternatively, the first SRS resource and the second SRS resource correspond to different SRS resource sets, but the first SRS resource and the second SRS resource correspond to a same usage, that is, codebook-based uplink channel state measurement or beam management.

In an implementation, before step 401, the following step is further included: The terminal sends a capability parameter to the network device.

The capability parameter of the terminal may include a quantity of antenna ports supported by the terminal for simultaneous uplink sending and a total quantity of antenna ports supported by the terminal. For example, the capability parameter may include "supportedSRS-xTyR", where y and x are positive integers, $y \geq x$, y indicates that a total quantity or a subset of receive antennas of the terminal is y antenna ports, and x indicates that an SRS may be sent through x antenna ports selected from the y antenna ports. In other words, x may be understood as a quantity of antenna ports for simultaneously performing an uplink sending behavior, and y may be understood as a total quantity of antenna ports for performing an uplink sending behavior.

For example, a specific value of N may be one or more of the following:

N=a value obtained by rounding up (y/x); or
N=channel state measurement information corresponding to (2*y/x-1); or

$$N=C_y^x,$$

where $C_y^x$ indicates a quantity of combinations of any x ports selected from y ports; or

N=N1, where N1 is a quantity of port combinations that are of x ports for sending an SRS signal and that are reported by the terminal device.

In an implementation, N=(y/x) may be understood as that any x antenna ports are selected from the y total antenna ports supported by the terminal device as antenna ports for simultaneously sending uplink data, and in this case, there may be a maximum of $C_y^x$ antenna port combinations. To reduce resource overheads occupied by the SRS, the network device configures $N=(y/x)<C_y^x$ SRS resources for the terminal device, where each SRS resource includes x SRS ports, and SRS ports included in different SRS resources are associated with different antenna ports of the terminal device.

For example, when a terminal capability is 2T4R, x is 2, y is 4, and N=(y/x)=2, an SRS resource set configured by the network device for the terminal may be shown in Table 1.

Table 1 SRS resource set

| SRS resource set | SRS resource | SRS port |
|---|---|---|
| #0 | #0 | #0, #1 |
| | #1 | #0, #1 |

In an implementation, N=(2*y/x-1) may be understood as that any x antenna ports are selected from the y total antenna ports supported by the terminal device as antenna ports for simultaneously sending uplink data, and in this case, there may be a maximum of $C_y^x$ antenna port combinations. To reduce resource overheads occupied by the SRS, the network device configures $N=(2*y/x-1)<C_y^x$ SRS resources for the terminal device, where each SRS resource includes x SRS ports, and different SRS resources have at least one SRS port associated with a same antenna port of the terminal device, that is, SRSs corresponding to the at least one SRS port of the different SRS resources are sent through the same antenna port of the terminal device.

For example, the SRS resource set includes a first SRS resource and a second SRS resource, each SRS resource includes at least two SRS ports, and a terminal antenna port associated with an mth SRS port of the first SRS resource is the same as a terminal antenna port associated with an nth SRS port of the second SRS resource. In other words, the terminal may send, through a same antenna port, an SRS corresponding to the mth SRS port of the first SRS resource and an SRS corresponding to the nth SRS port of the second SRS resource.

For example, when a terminal capability is 2T4R, x is 2, y is 4, and N=(2*y/x-1)=3, an SRS resource set configured by the network device for the terminal may be shown in Table 2.

Table 2 SRS resource set

| SRS resource set | SRS resource | SRS port |
|---|---|---|
| #0 | #0 | #0, #1 |
| | #1 | #0, #1 |
| | #2 | #0, #1 |

In an implementation, $N=C_y^x$ may be understood as that any x antenna ports are selected from the y total antenna ports supported by the terminal device as antenna ports for simultaneously sending uplink data, and in this case, there may be a maximum of $C_y^x$ antenna port combinations. Therefore, the network device configures $C_y^x$ SRS resources for the terminal device, where each SRS resource includes x SRS ports, each SRS resource corresponds to one combination of x SRS ports for sending, and different SRS resources have at least one SRS port corresponding to a different antenna port on the terminal side.

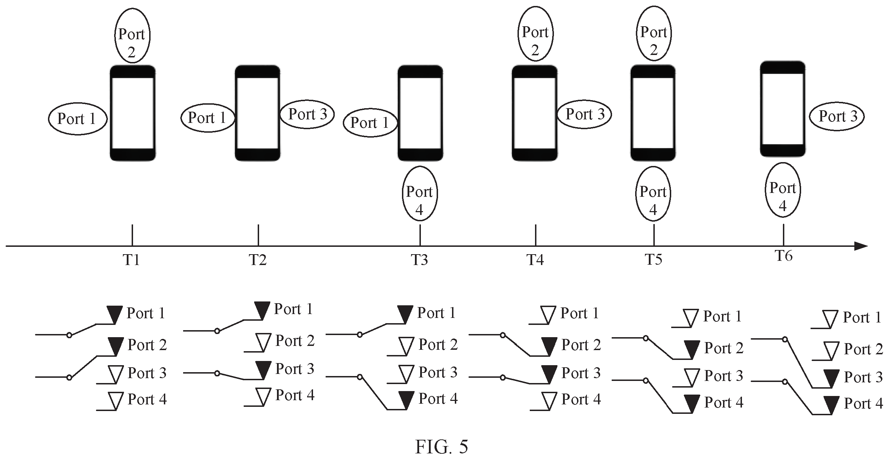

For example, a terminal capability is 2T4R, x is 2, y is 4, and $N=C_y^x=6$. For example, as shown in FIG. 5, the terminal may switch a channel corresponding to an antenna port by using a switch circuit. For example, an SRS resource set configured by the network device for the terminal may be shown in Table 3.

Table 3 SRS resource set

| SRS resource set | SRS resource | SRS port |
|---|---|---|
| #0 | #0 | #0, #1 |
| | #1 | #0, #1 |
| | #2 | #0, #1 |
| | #3 | #0, #1 |
| | #4 | #0, #1 |
| | #5 | #0, #1 |

In an implementation, N=N1 may be understood as that the terminal device may have some antenna port combinations that cannot implement simultaneous sending of uplink data. Therefore, the quantity N1 of antenna port combinations supported by the terminal may be less than or equal to $C_y^x$, where N1 is a positive integer.

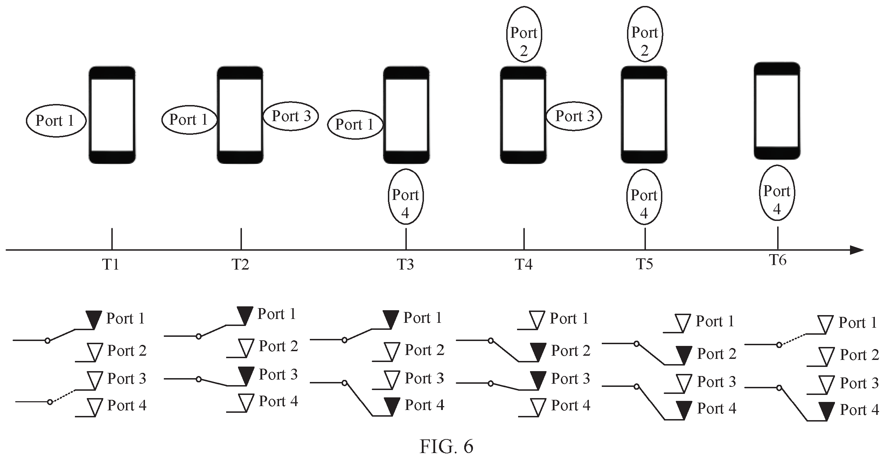

For example, when a terminal capability is 2T4R, x is 2, and y is 4, the terminal may switch a channel corresponding to an antenna port by using a switch circuit. For some antenna port combinations, the terminal cannot simultaneously send uplink data through the antenna port combinations due to some reasons, for example, a design reason of the switch circuit. As shown in FIG. 6, the terminal cannot implement an antenna port combination [1, 2] and an antenna port combination [3, 4]. In this case, a quantity of antenna port combinations that can be supported by the terminal is actually 4, and the terminal may report, to the network device, that the quantity of actually supported antenna port combinations is equal to 4. In this case, N=4, and an SRS resource set configured by the network device for the terminal may be shown in Table 4.

Table 4 SRS resource set

| SRS resource set | SRS resource | SRS port |
|---|---|---|
| #0 | #0 | #0, #1 |
| | #1 | #0, #1 |
| | #2 | #0, #1 |
| | #3 | #0, #1 |

Specifically, each antenna port may correspond to one physical antenna, or may correspond to a plurality of physical antennas. Physical antennas corresponding to different antenna ports may be partially the same, completely the same, or completely different. This is not specifically limited in this application.

402: The terminal receives the SRS configuration message, and sends an SRS on the SRS resource.

Specifically, the terminal sends, to the network device based on configuration information of the N SRS resources included in the SRS configuration message, SRSs of SRS ports corresponding to the N SRS resources. N≥2.

In an implementation, N=(y/x). The terminal device selects x antenna ports from y antenna ports to send the first SRS resource, and selects other x antenna ports from the y antennas to send the second SRS resource. Different SRS resources are associated with different antenna ports, that is, the different SRS resources are sent through the different antenna ports.

For example, when a terminal capability is 2T4R, x is 2, y is 4, and N=(y/x)=2, the terminal may determine a mapping relationship between an SRS port and an antenna port of the terminal device based on an SRS resource configuration of the network device, which is shown below.

Table 5 Mapping relationship between the SRS port and the antenna port of the terminal device

| SRS resource set | SRS resource | SRS port | Antenna port of the terminal device |
|---|---|---|---|
| #0 | #0 | #0, #1 | #1, #2 |
| | #1 | #0, #1 | #3, #4 |

The terminal device sends an SRS of the SRS port #0 in the SRS resource #0 through the antenna port #1, sends an SRS of the SRS port #1 in the SRS resource #0 through the antenna port #2, sends an SRS of the SRS port #0 in the SRS resource #1 through the antenna port #3, and sends an SRS of the SRS port #0 in the SRS resource #1 through the antenna port #4.

In an implementation, N=(2*y/x-1), and the terminal device sends, through a same antenna port, SRSs corresponding to at least one SRS port of different SRS resources. For example, the SRS resource set includes a first SRS resource and a second SRS resource, and each SRS resource includes at least two SRS ports. The terminal may send, through a same antenna port, an SRS corresponding to an m$^{th}$ SRS port of the first SRS resource and an SRS corresponding to an n$^{th}$ SRS port of the second SRS resource.

Optionally, a relationship between an SRS port index corresponding to m and an SRS port index corresponding to n is one or more of the following: The SRS port index corresponding to m is equal to the SRS port index corresponding to n; or m corresponds to a largest SRS port index in the first SRS resource, and n corresponds to a smallest SRS port index in the second SRS resource; or m corresponds to a largest SRS port index in the first SRS resource, and n corresponds to a largest SRS port index in the second SRS resource; or m corresponds to a smallest SRS port index in the first SRS resource, and n corresponds to a smallest SRS port index in the second SRS resource.

For example, when a terminal capability is 2T4R, x is 2, y is 4, and N=(2*y/x-1)=3, the terminal may determine a mapping relationship between an SRS port and an antenna port of the terminal device based on an SRS resource configuration of the network device, as shown in Table 6, Table 7, or Table 8.

Table 6 Mapping relationship between the SRS port and the antenna port of the terminal device

| SRS resource set | SRS resource | SRS port | Antenna port combination of the terminal |
| --- | --- | --- | --- |
| #0 | #0 | #0, #1 | #1, #2 |
| | #1 | #0, #1 | #2, #3 |
| | #2 | #0, #1 | #3, #4 |

m corresponds to the second SRS port #1 of the SRS resource #0, and n corresponds to the first SRS port #0 of the SRS resource #1; or m corresponds to the second SRS port #1 of the SRS resource #1, and n corresponds to the first SRS port #0 of the SRS resource #2, that is, an SRS corresponding to the second SRS port #1 of the SRS resource #0 and an SRS corresponding to the first SRS port #0 of the SRS resource #1 are sent through the same antenna port.

Table 7 Mapping relationship between the SRS port and the antenna port of the terminal device

| SRS resource set | SRS resource | SRS port | Antenna port combination of the terminal |
| --- | --- | --- | --- |
| #0 | #0 | #0, #1 | #1, #2 |
| | #1 | #0, #1 | #1, #3 |
| | #2 | #0, #1 | #1, #4 |

m corresponds to the first SRS port #1 of the SRS resource #0, and n corresponds to the first SRS port #0 of the SRS resource #1; or m corresponds to the first SRS port #1 of the SRS resource #1, and n corresponds to the first SRS port #0 of the SRS resource #2, that is, an SRS corresponding to the first SRS port #1 of the SRS resource #0 and an SRS corresponding to the first SRS port #0 of the SRS resource #1 are sent through the same antenna port.

Table 8 Mapping relationship between the SRS port and the antenna port of the terminal device

| SRS resource set | SRS resource | SRS port | Antenna port combination of the terminal |
| --- | --- | --- | --- |
| #0 | #0 | #0, #1 | #1, #4 |
| | #1 | #0, #1 | #2, #4 |
| | #2 | #0, #1 | #3, #4 |

m corresponds to the second SRS port #1 of the SRS resource #0, and n corresponds to the second SRS port #0 of the SRS resource #1; or m corresponds to the second SRS port #1 of the SRS resource #1, and n corresponds to the second SRS port #0 of the SRS resource #2, that is, an SRS corresponding to the second SRS port #1 of the SRS resource #0 and an SRS corresponding to the second SRS port #0 of the SRS resource #1 are sent through the same antenna port.

In an implementation, $N=C_y^x$ or N1, and the terminal device traverses different antenna port combinations, and sends different SRS resources based on the different antenna port combinations.

For example, a terminal capability is 2T4R, x is 2, y is 4, and $N=C_y^x=6$. Optionally, if the terminal device supports all antenna port combinations for sending, different SRS resources are sent through different antenna port combinations. The terminal may determine a mapping relationship between an SRS port and an antenna port of the terminal device based on an SRS resource configuration of the network device, which is shown below.

Table 9 Mapping relationship between the SRS port and the antenna port of the terminal device

| SRS resource set | SRS resource | SRS port | Antenna port combination of the terminal |
|---|---|---|---|
| #0 | #0 | #0, #1 | #1, #2 |
| | #1 | #0, #1 | #1, #3 |
| | #2 | #0, #1 | #1, #4 |
| | #3 | #0, #1 | #2, #3 |
| | #4 | #0, #1 | #2, #4 |
| | #5 | #0, #1 | #3, #4 |

Optionally, if the terminal device supports only some antenna port combinations for sending, for example, as shown in FIG. 6, the terminal cannot implement an antenna port combination [1, 2] and an antenna port combination [3, 4]. In this case, for an SRS resource, only some antenna ports are used for sending, and the terminal may determine a mapping relationship between an SRS port and an antenna port of the terminal device based on an SRS resource configuration of the network device, which is shown below.

Table 10 Mapping relationship between the SRS port and the antenna port of the terminal device

| SRS resource set | SRS resource | SRS port | Antenna port combination of the terminal |
|---|---|---|---|
| #0 | #0 | #0, #1 | #1 |
| | #1 | #0, #1 | #1, #3 |
| | #2 | #0, #1 | #1, #4 |
| | #3 | #0, #1 | #2, #3 |
| | #4 | #0, #1 | #2, #4 |
| | #5 | #0, #1 | #4 |

For example, a terminal capability is 2T4R, x is 2, y is 4, and N=N1=4. Optionally, if the terminal device supports only some antenna port combinations for sending, for example, as shown in FIG. 6, the terminal cannot implement an antenna port combination [1, 2] and an antenna port combination [3, 4]. The terminal may determine a mapping relationship between an SRS port and an antenna port of the terminal device based on an SRS resource configuration of the network device, which is shown below.

Table 11 Mapping relationship between the SRS port and the antenna port of the terminal device

| SRS resource set | SRS resource | SRS port | Antenna port combination of the terminal |
|---|---|---|---|
| #0 | #0 | #0, #1 | #1, #3 |
| | #1 | #0, #1 | #1, #4 |
| | #2 | #0, #1 | #2, #3 |
| | #3 | #0, #1 | #2, #4 |

403: The network device receives and measures the SRS signal, determines an uplink data port combination of the terminal, and sends first indication information to the terminal.

Correspondingly, the network device may receive SRS signals on the N SRS resources, and then may measure the N SRS resources to obtain channel state measurement information corresponding to N2 SRS port combinations, where each SRS port combination includes x SRS ports, and $N \leq N2 \leq C_y^x$ .

For example, a value of N may be the quantity $C_y^x$ or N1 of antenna port combinations supported by the terminal. In other words, the network device configures the N SRS resources, so that the terminal can use all supported antenna port combinations for SRS measurement. In this way, the network device can determine, based on channel states of the N antenna port combinations, an antenna port combination used by the terminal for uplink data transmission.

For another example, a value of N may be less than the quantity $C_y^x$ or N1 of antenna port combinations supported by the terminal, so that the terminal can estimate, based on SRS measurement, channel state measurement information corresponding to the N2 antenna port combinations. In this way, the network device can determine, based on channel states of the N2 antenna port combinations, an antenna port combination used by the terminal for uplink data transmission.

For example, the network device may obtain channel state measurement information of x1 SRS ports based on measurement of the N SRS resources, where x1 is greater than or equal to x and less than or equal to y. Then, the network device may obtain channel state measurement information of N2 port combinations of x SRS ports based on the channel state measurement information of the x1 SRS ports, where $N \leq N2 \leq C_y^x$ .

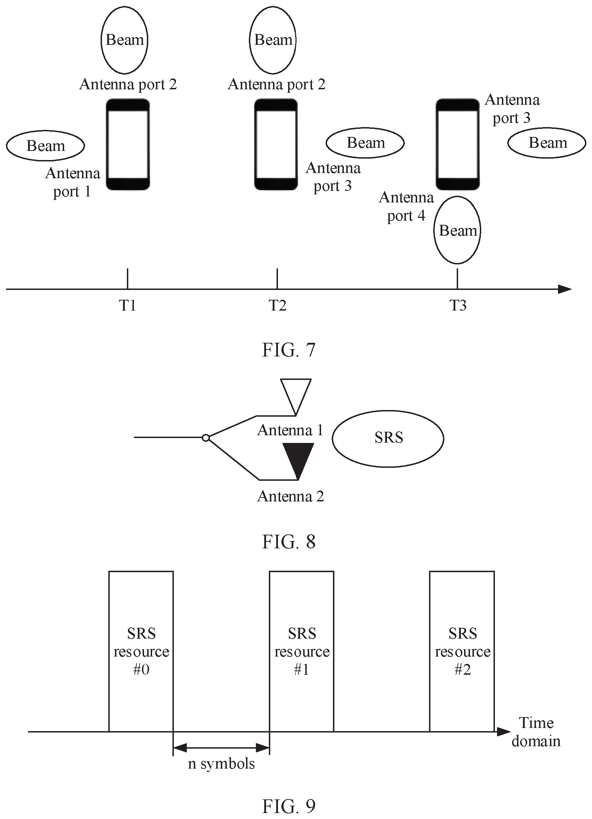

Specifically, because different antenna port combinations are used to send signals, the terminal side needs to perform antenna channel switching, and send the signals in time division mode. In this case, due to a non-ideal factor of a frequency generator, there is a random initial phase difference between signals sent at different moments. For example, as shown in FIG. 7, the terminal may send SRSs at a moment T1 through an antenna port 1 and an antenna port 2, and the terminal may send SRSs at a moment T2 through the antenna port 2 and an antenna port 3. In this case, for SRS signals sent through the antenna port 2 of the terminal at the moment T1 and the moment T2, a difference between channel state measurement results obtained by the network device is one random phase value.

In this case, if the network device wants to obtain channel state measurement results of SRSs simultaneously sent through the antenna port 1 and the antenna port 3, a random phase difference between SRSs sent at different moments needs to be considered. For example, as shown in FIG. 7, the network device may obtain channel state measurement results of the antenna port 2 at the moment T1 and the moment T2 respectively, then calculate a random phase difference between signals sent at the moment T1 and the moment T2, and perform phase compensation on the channel state measurement result of the antenna port 1 obtained at the moment T1 and the channel state measurement result of the antenna port 3 obtained at the moment T2. In this way, channel state measurement results of signals sent through the antenna port 1 and the antenna port 3 at a same moment can be estimated.

For example, an uplink simultaneous transmission vector of the antenna port 1 and the antenna port 2 at the moment T1 may be represented as $e^{j\theta_a} \begin{bmatrix} h_1(T1) \\ h_2(T1) \end{bmatrix}$ , an uplink simultaneous transmission vector of the antenna port 2 and the antenna port 3 at the moment T2 may be represented as $e^{j\theta_b} \begin{bmatrix} h_2(T2) \\ h_3(T2) \end{bmatrix}$ , and an uplink simultaneous transmission vector of the antenna port 3 and the antenna port 4 at the moment T3 may be represented as $e^{j\theta_c} \begin{bmatrix} h_3(T3) \\ h_4(T3) \end{bmatrix}$ .

Then, a phase difference can be calculated as: phase $\left( \frac{h_2(T1)}{h_1(T1)} \right) = \frac{e^{j\theta_2}(T1)}{e^{j\theta_1}} = \frac{e^{j(\theta_a + \Delta\theta_2)}}{e^{j(\theta_a + \Delta\theta_1)}}$ ; and

$$\text{phase } \left( \frac{h_3(T2)}{h_2(T2)} \right) = \frac{e^{j\theta_2}(T2)}{e^{j\theta_3}} = \frac{e^{j(\theta_b + \Delta\theta_2)}}{e^{j(\theta_b + \Delta\theta_3)}}.$$

It can be further obtained that: phase $\left( \frac{h_3}{h_1} \right) = \text{phase } \left( \frac{h_3(T2)}{h_2(T2)} \right) / \text{phase } \left( \frac{h_2(T1)}{h_1(T1)} \right) = e^{j(\Delta\theta_3 - \Delta\theta_1)}$ , so that an uplink simultaneous transmission weight vector of the antenna port 1 and the antenna port 3 can be estimated.

Specifically, the network device may select an SRS port combination with a better good channel state from the channel state measurement information corresponding to the N2 SRS port combinations, where the SRS port combination corresponds to an antenna port combination of the terminal. The network device may send the first indication information to the terminal, to indicate, to the terminal, the antenna port combination used for uplink data transmission.

In an implementation, the first indication information may include a first SRS port combination in the N2 SRS port combinations, to indicate the terminal to send the uplink data through an antenna port same as the first SRS port combination; or the first indication information may include x port indications of the x1 SRS ports, to indicate, in a bitmap (bitmap) indication manner, that the terminal sends the uplink data through antenna ports corresponding to the x port indications, N2 is greater than or equal to N and less than or equal to $C_y^x$ , x1 and x are positive integers, and x1 is greater than or equal to x.

In an implementation, the first indication information may include an SRS resource index, to indicate the terminal device to send the uplink data through an antenna port same as an SRS resource associated with the SRS resource index. For example, a terminal capability is 2T4R, x is 2, and y is 4. If $N=C_y^x=6$ , the SRS resource index #0 indicates that the terminal device sends the uplink data through the antenna port #1 and the antenna port #2, the SRS resource index #1 indicates that the terminal device sends the uplink data through the antenna port #1 and the antenna port #3, and the rest may be deduced by analogy; or if N=N1=4, the SRS resource index #0 indicates that the terminal device sends the uplink data through the antenna port #1 and the antenna port #3, the SRS resource index #1 indicates that the terminal device sends the uplink data through the antenna port #1 and the antenna port #4, and the rest may be deduced by analogy.

In an implementation, the first indication information may include an antenna port combination index. Specifically, the network device and the terminal side may predefine an antenna port combination index table, and the network device side may dynamically indicate an antenna port combination used for sending uplink data on the terminal side. For example, a terminal capability is 2T4R, x is 2, y is 4, and six antenna port combination indexes are predefined. A combination index 0 indicates that the terminal device is indicated to send the uplink data through the antenna port #1 and the antenna port #2, and a combination index 2 indicates that the terminal device is indicated to send the uplink data through the antenna port #1 and the antenna port #2, and the rest may be deduced by analogy, as shown in Table 12.

Table 12

| Index value | Antenna port combination of the terminal |
|---|---|
| 0 | #1, #2 |
| 1 | #1, #3 |
| 2 | #1, #4 |
| 3 | #2, #3 |
| 4 | #2, #4 |
| 5 | #3, #4 |

Optionally, the uplink index value may also be in a form of a bitmap. For example, a bit 1 of the bitmap may represent a first antenna port of the terminal, a bit 2 of the bitmap may represent a second antenna port of the terminal, and the rest may be deduced by analogy. If the terminal device has four antenna ports in total, 0011 indicates that the terminal device sends uplink data through the antenna port #3 and the antenna port #4.

In an implementation, the first indication information may include an SRS port combination index. Specifically, the network device and the terminal side may predefine an SRS port combination index table, and the network device side may dynamically indicate an SRS port combination used for sending uplink data on the terminal side. For example, if a terminal capability is 2T4R, the SRS resource set includes two SRS resources, and each SRS resource includes two SRS ports. In this case, six SRS port combination indexes are predefined. A combination index 0 indicates that the terminal device sends uplink data through an antenna port of the terminal device associated with the SRS port #0 of the SRS resource #0 and an antenna port of the terminal device associated with the SRS port #1 of the SRS resource #0. A combination index 1 indicates that the terminal device sends uplink data through an antenna port of the terminal device associated with the SRS port #0 of the SRS resource #0 and an antenna port of the terminal device associated with the SRS port #0 of the SRS resource #1, and the rest may be deduced by analogy, as shown in Table 13.

Table 13

| Index value | SRS port combination |
|---|---|
| 0 | {SRS resource #0-->SRS port #0, SRS resource #0-->SRS port #1} |
| 1 | {SRS resource #0-->SRS port #0, SRS resource #1-->SRS port #0} |
| 2 | {SRS resource #0-->SRS port #0, SRS resource #1-->SRS port #1} |
| 3 | {SRS resource #1-->SRS port #0, SRS resource #1-->SRS port #1} |
| 4 | {SRS resource #0-->SRS port #1, SRS resource #1-->SRS port #0} |

(continued)

| Index value | SRS port combination |
|---|---|
| 5 | {SRS resource #0-->SRS port #1, SRS resource #1-->SRS port #1} |

Optionally, the uplink index value may also be in a form of a bitmap. For example, a bit 1 of the bitmap may represent a first SRS port of a first SRS resource of the terminal, a bit 2 of the bitmap may represent a second SRS port of the first SRS resource, and the rest may be deduced by analogy. If the network device configures two SRS resources for the terminal device in total, and each SRS resource includes two SRS ports, 0011 indicates that the terminal device sends uplink data through an antenna port of the terminal device associated with the SRS port #0 of the SRS resource #1 and an antenna port of the terminal device associated with the SRS port #1 of the SRS resource #1.

Further, the network device may calculate information such as a corresponding precoding matrix indicator (Transmitted Precoding Matrix Indicator, TPMI), a channel quality indicator (Channel Quality Indicator, CQI), and a channel rank indicator (Rank Indicator, RI), and select, based on a criterion such as a capacity maximization, a stream quantity maximization, or interference minimization, an antenna port combination from a plurality of antenna port combinations as antenna ports used by the terminal for uplink data transmission and simultaneous sending.

For example, the network device determines, for the terminal, that the first port combination is used to send uplink data, and sends the first indication information to indicate the first port combination. Optionally, when the network device indicates an antenna port for uplink transmission to the terminal by using the first indication information, scheduling information such as an uplink TPMI, a modulation and coding scheme (Modulation and coding scheme, MCS), or a time-frequency domain resource indication may also be carried.

404: The terminal sends the uplink data to the network device based on the first indication information.

Correspondingly, the terminal receives the first indication information, determines the uplink data port combination scheduled by the network device for the terminal, and sends the uplink data.

In the foregoing implementation of this application, the network device side may obtain the channel state measurement information in the plurality of antenna port combinations, so that intra-cell interference and inter-cell interference information of uplink scheduling of the terminal at the current moment can be comprehensively considered, and a more appropriate transmit antenna port combination can be selected for uplink transmission of the terminal, thereby improving transmission efficiency and scheduling flexibility, and also improving cell-level or user-level capacity.

It should be noted that, as shown in FIG. 5 to FIG. 7 in this application, an SRS port for each SRS may correspond to one physical antenna of the terminal, or optionally, an SRS port for sending each SRS may correspond to a plurality of physical antennas of the terminal. In other words, the SRS may be sent in a weighted joint manner through the plurality of physical antennas of the terminal. For example, as shown in FIG. 8, an SRS port corresponds to a physical antenna 1 and an antenna 2 of the terminal, and an SRS is jointly sent through the antenna 1 and the antenna 2.

In addition, in a specific implementation process, the terminal needs to perform antenna switching to send the SRS through different SRS ports. In consideration of an antenna switching delay of the terminal, a guard interval may be set between SRS resources. For example, as shown in FIG. 9, the guard interval may be set to n symbols, different SRS resources occupy different time domain symbols, and there may be n time-domain symbols between the SRS resource #0 and the SRS resource #1. The guard interval of the SRS resource may be defined by a protocol, or may be configured by the network device. This is not limited in this application.

In the foregoing implementation, the network device may configure SRS resources of a plurality of antenna port combinations for the terminal side, and the network device side may obtain channel state measurement information of the plurality of antenna port combinations, and select an antenna port combination for uplink data transmission of the terminal by comprehensively considering intra-cell interference and inter-cell interference information and the like of uplink scheduling of the terminal at the current moment, thereby improving scheduling flexibility and efficiency, and also improving cell-level or user-level capacity. In addition, if some antenna port combinations on the terminal side cannot be used for simultaneous sending, the terminal side may autonomously determine that no signal is sent on a corresponding SRS resource, and implicitly notify a base station that the antenna port combinations cannot be used for simultaneous sending, thereby avoiding the network device side from selecting the antenna port combinations for uplink data sending.

Embodiments mentioned above in this application may be combined when the solutions do not conflict. This is not limited.

The foregoing mainly describes the solutions provided in this application from the perspective of interaction between network elements. Correspondingly, this application further provides a communication apparatus. The communication apparatus may be the network device in the foregoing method embodiments, or may be a component that can be used in the network device. Alternatively, the communication apparatus may be the terminal in the foregoing method embodiments, or an apparatus including the terminal, or may be a component that can be used in the terminal. It may be understood that to implement the foregoing functions, the foregoing network device or terminal includes corresponding hardware structures and/or software modules for implementing the functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

It should be understood that interaction between network elements is described above by using the terminal and a network device as an example. Actually, processing performed by the terminal is not limited to being performed only by a single network element, and processing performed by the network device is not limited to being performed only by a single network element. For example, processing performed by the network device may be separately performed by at least one of a CU, a DU, and an RU.

In this application, the network device or terminal may be divided into functional modules based on the foregoing method examples. For example, the functional modules may be obtained through division in a one-to-one correspondence with the functions, or two or more functions may be integrated into one processing module. The integrated module may be implemented in a form of hardware, or may be implemented in a form of a software functional module. It may be understood that division of the modules in this application is an example. The division is merely logical function division and may be other division in actual implementation.

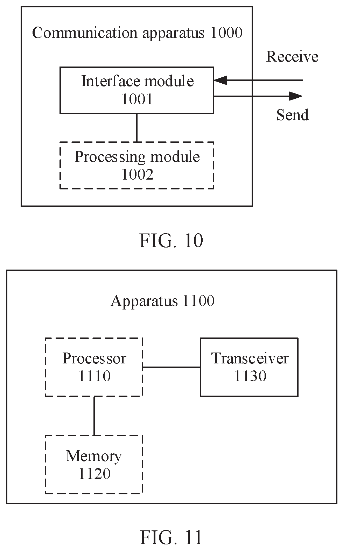

For example, when each functional module is obtained through division in an integrated manner, FIG. 10 is a diagram of a structure of a communication apparatus 1000. The communication apparatus 1000 includes an interface module 1001. The interface module 1001 may implement a corresponding communication function. In addition, the interface module 1001 may also be referred to as a transceiver module, a communication interface, a communication module, or the like.

Optionally, the communication apparatus 1000 may further include a processing module 1002. The processing module 1002 is configured to perform data processing.

Optionally, the communication apparatus 1000 may further include a storage module. The storage module may be configured to store instructions and/or data. The processing module 1002 may read the instructions and/or the data in the storage module, to enable the communication apparatus 1000 to implement the foregoing method embodiments.

The communication apparatus 1000 may be configured to perform an action performed by the terminal or the network device in the foregoing method embodiment. Specifically, the communication apparatus 1000 may be the terminal or the network device, or a component or an apparatus that can be configured in the terminal or the network device. The processing module 1002 is configured to perform a processing-related operation of the terminal or the network device in the foregoing method embodiments. The interface module 1001 is configured to perform a communication-related operation of the terminal or the network device in the foregoing method embodiments.

Optionally, the interface module 1001 may include a sending module and a receiving module. The sending module is configured to perform the sending operation in the foregoing method embodiments. The receiving module is configured to perform the receiving operation in the foregoing method embodiments.

It should be noted that, the communication apparatus 1000 may include the sending module but not include the receiving module. Alternatively, the communication apparatus 1000 may include the receiving module but not include the sending module. This may be specifically determined depending on whether the foregoing solutions performed by the communication apparatus 1000 include a sending action and a receiving action.

In some embodiments, the communication apparatus 1000 may further include a storage module (not shown in FIG. 10), configured to store program instructions and data.

For example, the communication apparatus 1000 may be configured to implement a function of the network device in the foregoing embodiments. The communication apparatus 1000 is, for example, the network device described in the embodiment shown in FIG. 4.

The interface module 1001 is configured to send a sounding reference signal SRS configuration message to a terminal, where the SRS configuration message includes a first SRS resource and a second SRS resource, the first SRS resource includes one or more SRS ports, and the second SRS resource includes one or more SRS ports.

The interface module 1001 is further configured to receive an SRS corresponding to an $m^{th}$ SRS port of the first SRS resource and an SRS corresponding to an $n^{th}$ SRS port of the second SRS resource that are sent by the terminal through a same antenna port, where N, m, and n are positive integers.

In an implementation, the first SRS resource and the second SRS resource correspond to a same SRS resource set, or the first SRS resource and the second SRS resource correspond to different SRS resource sets with a same usage.

In an implementation, the usage of the SRS resource set is codebook-based uplink channel state measurement or beam management.

In an implementation, the $m^{th}$ SRS port and the $n^{th}$ SRS port occupy different time domain resources, or the $m^{th}$ SRS port and the $n^{th}$ SRS port occupy different frequency domain resources.

In an implementation, a relationship between an SRS port index corresponding to m and an SRS port index corresponding to n is one or more of the following:

The SRS port index corresponding to m is equal to the SRS port index corresponding to n; or
m corresponds to a largest SRS port index in the first SRS resource, and n corresponds to a smallest SRS port index in the second SRS resource; or
m corresponds to a largest SRS port index in the first SRS resource, and n corresponds to a largest SRS port index in the second SRS resource; or
m corresponds to a smallest SRS port index in the first SRS resource, and n corresponds to a smallest SRS port index in the second SRS resource.

In an implementation, the SRS configuration message includes N SRS resources, and a specific value of N is one or more of the following:

$$N=\text{round up }(y/x);$$

or

$$N=C_y^x,$$

where $C_y^x$ indicates a quantity of combinations of any x ports selected from y ports; or

$$N=\text{round up }(2*y/x-1);$$

or

$$N=N1,$$

where N1 is a quantity of port combinations that are of x ports for sending an SRS signal and that are reported by the terminal device, x, y, and N1 are positive integers, N is less than or equal to $C_y^x$, and N1 is less than or equal to $C_y^x$.

In an implementation, x is a quantity of ports supported by the terminal device for uplink SRS sending, y is a quantity of ports supported by the terminal device for downlink receiving, x and y are positive integers, and x is less than or equal to y.

In an implementation, the interface module 1001 is further configured to receive SRSs corresponding to the N SRS resources, to obtain channel state measurement information of x1 SRS ports, where x1 is greater than or equal to x, and x1 is less than or equal to y.

In an implementation, the interface module 1001 is further configured to obtain, based on the channel state measurement information of the x1 SRS ports, channel state measurement information corresponding to N2 SRS port combinations, where each SRS port combination includes x SRS ports, and N2 is greater than or equal to N and less than or equal to $C_y^x$.

In an implementation, the interface module 1001 is further configured to send first indication information to the terminal, to indicate an antenna port combination used for sending uplink data.

In an implementation, the first indication information includes a first SRS port combination in the N2 SRS port combinations, to indicate the terminal to send the uplink data through an antenna port same as the first SRS port combination; or the first indication information includes x port indications of the x1 SRS ports, to indicate the terminal to send the uplink data through antenna ports corresponding to the x port indications, N2 is greater than or equal to N and less than or equal to $C_y^x$, x1 and x are positive integers, and x1 is greater than or equal to x.

In addition, the communication apparatus 1000 may be further configured to implement, for example, the terminal described in the embodiment shown in FIG. 4.

The interface module 1001 is configured to: receive an SRS configuration message, where the SRS configuration message includes a first SRS resource and a second SRS resource, the first SRS resource includes one or more SRS ports, and the second SRS resource includes one or more SRS ports; and send, through a same antenna port, an SRS corresponding to an m$^{th}$ SRS port of the first SRS resource and an SRS corresponding to an n$^{th}$ SRS port of the second SRS resource, where N, m, and n are positive integers.

In an implementation, the first SRS resource and the second SRS resource correspond to a same SRS resource set, or the first SRS resource and the second SRS resource correspond to different SRS resource sets with a same usage.

In an implementation, the usage of the SRS resource set is codebook-based uplink channel state measurement or beam management.

In an implementation, the $m^{th}$ SRS port and the $n^{th}$ SRS port occupy different time domain resources, or the $m^{th}$ SRS port and the $n^{th}$ SRS port occupy different frequency domain resources.

In an implementation, a relationship between an SRS port index corresponding to m and an SRS port index corresponding to n is one or more of the following:

The SRS port index corresponding to m is equal to the SRS port index corresponding to n; or
m corresponds to a largest SRS port index in the first SRS resource, and n corresponds to a smallest SRS port index in the second SRS resource; or
m corresponds to a largest SRS port index in the first SRS resource, and n corresponds to a largest SRS port index in the second SRS resource; or
m corresponds to a smallest SRS port index in the first SRS resource, and n corresponds to a smallest SRS port index in the second SRS resource.

In an implementation, the SRS configuration message includes N SRS resources, and a specific value of N is one or more of the following:

$$N=\text{round up } (y/x);$$

or

$$N=C_y^x,$$

where $C_y^x$ indicates a quantity of combinations of any x ports selected from y ports; or

$$N=\text{round up } (2*y/x-1);$$

or

$$N=N1,$$

where N1 is a quantity of port combinations that are of x ports for sending an SRS signal and that are reported by the terminal device, x, y, and N1 are positive integers, N is less than or equal to $C_y^x$, and N1 is less than or equal to $C_y^x$.

In an implementation, x is a quantity of ports supported by the terminal device for uplink SRS sending, y is a quantity of ports supported by the terminal device for downlink receiving, x and y are positive integers, and x is less than or equal to y.

In an implementation, the interface module 1001 is further configured to send SRSs corresponding to the N SRS resources, where the SRSs corresponding to the N SRS resources are used by the network device to obtain, based on the received SRSs, channel state measurement information corresponding to N2 SRS port combinations, and indicate, to the terminal, an antenna port combination for sending uplink data, each SRS port combination includes x SRS ports, and N2 is greater than or equal to N and less than or equal to $C_y^x$.

In an implementation, the interface module 1001 is further configured to: receive first indication information from the network device, to indicate the antenna port combination used for sending the uplink data; and send the uplink data based on the first indication information.

In an implementation, the first indication information includes a first SRS port combination in the N2 SRS port combinations, to indicate the terminal to send the uplink data through an antenna port same as the first SRS port combination; or the first indication information includes x port indications of the x1 SRS ports, to indicate the terminal to send the uplink data through antenna ports corresponding to the x port indications, N2 is greater than or equal to N and less than or equal to $C_y^x$, x1 and x are positive integers, and x1 is greater than or equal to x.

When the communication apparatus 1000 is configured to implement functions of the terminal or the network device in the foregoing embodiments, for other functions that can be implemented by the communication apparatus 1000, refer to related descriptions of the embodiment shown in FIG. 4. Details are not described again.

In a simple embodiment, a person skilled in the art may figure out that the communication apparatus 1000 may be in a form shown in FIG. 3. For example, the processor 301 in FIG. 3 may invoke the computer-executable instructions stored in the memory 304, to enable the communication apparatus 1000 to perform the method in the foregoing method embodiments.

For example, a function/implementation process of the interface module 1001 in FIG. 10 may be implemented through the communication interface 303 in FIG. 3.

For other implementations, refer to the detailed descriptions of the foregoing embodiments. Details are not described herein again.

It should be understood that a specific process in which the modules perform the foregoing corresponding process has been described in detail in the foregoing method embodiments. For brevity, details are not described herein again.

The processing module 1002 in the foregoing embodiment may be implemented by at least one processor or a processor-related circuit. The interface module 1001 may be implemented by a transceiver or a transceiver-related circuit. The interface module 1001 may also be referred to as a transceiver module, a communication module, or a communication interface. Optionally, the storage module may be implemented by at least one memory.

An embodiment of this application further provides an apparatus 1100. Refer to FIG. 11. The apparatus 1100 includes a processor 1110. The processor 1110 is coupled to a memory 1120. The memory 1120 is configured to store a computer program or instructions and/or data. The processor 1110 is configured to execute the computer program or instructions and/or the data stored in the memory 1120, to perform the method in the method embodiments. The apparatus 1100 is configured to implement operations performed by the terminal or the network device in the foregoing method embodiments.

Optionally, the apparatus 1100 includes one or more processors 1110.

Optionally, as shown in FIG. 11, the apparatus 1100 may further include the memory 1120.

Optionally, the apparatus 1100 may include one or more memories 1120.

Optionally, the memory 1120 and the processor 1110 may be integrated, or separately disposed.

Optionally, as shown in FIG. 11, the apparatus 1100 may further include a transceiver 1130. The transceiver 1130 is configured to receive and/or send signals. For example, the processor 1110 is configured to control the transceiver 1130 to receive and/or send the signals.

This application further provides an apparatus 1200. The apparatus 1200 may be a processor or a chip in a terminal or a network device. The apparatus 1200 may be configured to perform operations performed by the terminal or the network device in the foregoing method embodiments.

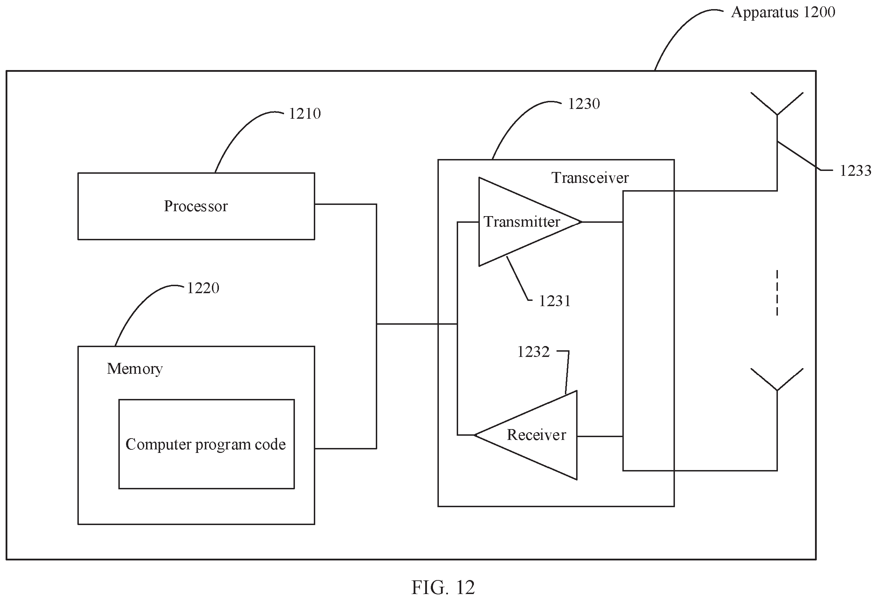

When the apparatus 1200 is a terminal or a network device, FIG. 12 is a diagram of a simplified structure. As shown in FIG. 12, the apparatus 1200 includes a processor, a memory, and a transceiver. The memory may store computer program code. The transceiver includes a transmitter 1231, a receiver 1232, a radio frequency circuit (not shown in the figure), an antenna 1233, and an input/output apparatus (not shown in the figure).

The processor is mainly configured to: process a communication protocol and communication data, control the apparatus 1200, execute a software program, process data of the software program, and the like.

The memory is mainly configured to store the software program and data.

The radio frequency circuit is mainly configured to: perform conversion between a baseband signal and a radio frequency signal, and process the radio frequency signal.

The antenna is mainly configured to receive/send a radio frequency signal in a form of an electromagnetic wave.

The input/output apparatus may include a touchscreen, a display, a keyboard, or the like. The input/output apparatus is mainly configured to: receive data input by a user, and output data to the user. It should be noted that some types of terminal devices may have no input/output apparatus.

When data needs to be sent, the processor outputs the baseband signal to the radio frequency circuit after performing baseband processing on the to-be-sent data. Then, the radio frequency circuit performs radio frequency processing on the baseband signal, and then sends the radio frequency signal to the outside in a form of an electromagnetic wave through the antenna. When data is sent to the terminal device, the radio frequency circuit receives the radio frequency signal through the antenna. The radio frequency circuit converts the radio frequency signal into the baseband signal, and outputs the baseband signal to the processor. The processor converts the baseband signal into data, and processes the data. For ease of description, FIG. 12 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna having sending and receiving functions and the radio frequency circuit may be considered as a transceiver module and an interface module of the apparatus 1200, and the processor having a processing function may be considered as a processing module of the apparatus 1200.

As shown in FIG. 12, the apparatus 1200 includes a processor 1210, a memory 1220, and a transceiver 1230.

The processor 1210 may also be referred to as a processing unit, a processing board, a processing module, a processing apparatus, or the like. The transceiver 1230 may also be referred to as a transceiver unit, a transceiver machine, a transceiver apparatus, or the like.

Optionally, a component that is in the transceiver 1230 and that is configured to implement a receiving function may be considered as a receiving module, and a component that is in the transceiver 1230 and that is configured to implement a sending function may be considered as a sending module. In other words, the transceiver 1230 includes a receiver machine and a transmitter machine. The transceiver may also be sometimes referred to as a transceiver machine, a transceiver module, a transceiver circuit, or the like. The receiver machine may also be sometimes referred to as a receiver, a receiving module, a receiver circuit, or the like. The transmitter machine may also be sometimes referred to as a transmitter, a transmitting module, a transmitter circuit, or the like.

The processor 1210 is configured to perform a processing action on the terminal or the network device in the foregoing embodiments. The transceiver 1230 is configured to perform receiving and sending actions on the terminal or the network device in the foregoing embodiments.

When the apparatus 1200 is a chip, the chip includes a processor, a memory, and a transceiver. The transceiver may be an input/output circuit or a communication interface. The processor may be a processing module, a microprocessor, or an integrated circuit integrated on the chip. A sending operation performed by the terminal or the network device in the foregoing method embodiments may be understood as an output of the chip. A receiving operation performed by the terminal or the network device in the foregoing method embodiments may be understood as an input of the chip.

An embodiment of this application further provides a computer-readable storage medium. The computer-readable storage medium stores computer instructions for implementing the method performed by the terminal or the network device in the foregoing method embodiments.

For example, when the computer program is executed by a computer, the computer is enabled to implement the method performed by the terminal or the network device in the foregoing method embodiments.

An embodiment of this application further provides a computer program product including instructions. When the instructions are executed by a computer, the computer is enabled to implement the method performed by the terminal or the network device in the foregoing method embodiments.

An embodiment of this application further provides a communication system. The communication system includes the terminal and the network device in the foregoing embodiments.

An embodiment of this application further provides a chip apparatus including a processor, configured to invoke a computer program or computer instructions stored in a memory, to enable the processor to perform the method in the foregoing embodiments.

In a possible implementation, an input of the chip apparatus corresponds to a receiving operation in the foregoing embodiments, and an output of the chip apparatus corresponds to a sending operation in the foregoing embodiments.

It may be understood that one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be embedded in an SoC (System-On-a-Chip, SoC, system-on-a-chip) or an application-specific integrated circuit (Application Specific Integrated Circuit, ASIC), or may be an independent semiconductor chip. The processor may further include a necessary hardware accelerator, such as a field programmable gate array (field programmable gate array, FPGA), a PLD (programmable logic device, PLD, programmable logic device), or a logic circuit that implements dedicated logic operations, in addition to the core for executing software instructions to perform operations or processing.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete component, and the hardware may run necessary software or does not depend on software to perform the foregoing method procedures.

Optionally, this application further provides a system-on-chip, including at least one processor and an interface. The at least one processor is coupled to a memory through the interface. When the at least one processor executes a computer program or computer instructions in the memory, the method in any one of the foregoing method embodiments is performed. In a possible implementation, the chip system further includes a memory. Optionally, the chip system may include a chip, or may include a chip and another discrete component. This is not specifically limited in this application.

Optionally, this application further provides a computer-readable storage medium. All or some of procedures in the foregoing method embodiments may be implemented by related hardware instructed by a computer program. The program may be stored in the foregoing computer-readable storage medium. When the program is executed, the procedures in the foregoing method embodiments may be included. The computer-readable storage medium may be an internal storage unit of the communication apparatus in any one of the foregoing embodiments, for example, a hard disk or memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the computer program and store other programs and data that are required by the communication apparatus. The computer-readable storage medium may be further configured to temporarily store data that has been output or is to be output.

Optionally, this application further provides a computer program product. All or some of the procedures in the foregoing method embodiments may be implemented by a computer program instructing related hardware. The program may be stored in the computer program product. When the program is executed, the procedures of the foregoing method embodiments may be included.

Optionally, this application further provides computer instructions. All or some of the procedures in the foregoing method embodiments may be completed by computer instructions instructing related hardware (for example, a computer, a processor, a network device, or a terminal). The program may be stored in the computer-readable storage medium or the computer program product.

Optionally, this application further provides a communication system, including the network device and the terminal in the foregoing embodiments.

Based on the foregoing descriptions of the implementations, a person skilled in the art may clearly understand that for the purpose of convenient and brief descriptions, division into the foregoing functional modules is merely used as an example for descriptions. During actual application, the foregoing functions can be allocated to different functional modules for implementation based on a requirement, in other words, an inner structure of an apparatus is divided into different functional modules to implement all or a part of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A communication method, wherein the method comprises:

   sending a sounding reference signal SRS configuration message to a terminal, wherein the SRS configuration message comprises a first SRS resource and a second SRS resource, the first SRS resource comprises one or more SRS ports, and the second SRS resource comprises one or more SRS ports; and
   receiving an SRS corresponding to an $m^{th}$ SRS port of the first SRS resource and an SRS corresponding to an $n^{th}$ SRS port of the second SRS resource that are sent by the terminal through a same antenna port, wherein m and n are positive integers.

2. A communication method, wherein the method comprises:

   receiving a sounding reference signal SRS configuration message, wherein the SRS configuration message comprises a first SRS resource and a second SRS resource, the first SRS resource comprises one or more SRS ports, and the second SRS resource comprises one or more SRS ports; and
   sending, through a same antenna port, an SRS corresponding to an $m^{th}$ SRS port of the first SRS resource and an SRS corresponding to an $n^{th}$ SRS port of the second SRS resource, wherein m and n are positive integers.

3. The method according to claim 1 or 2, wherein the first SRS resource and the second SRS resource correspond to a same SRS resource set, or the first SRS resource and the second SRS resource correspond to different SRS resource sets with a same usage.

4. The method according to claim 3, wherein the usage of the SRS resource set is codebook-based uplink channel state measurement or beam management.

5. The method according to any one of claims 1 to 4, wherein the $m^{th}$ SRS port and the $n^{th}$ SRS port occupy different time domain resources, and/or the $m^{th}$ SRS port and the $n^{th}$ SRS port occupy different frequency domain resources.

6. The method according to any one of claims 1 to 5, wherein a relationship between a port index corresponding to the $m^{th}$ SRS port and a port index corresponding to the $n^{th}$ SRS port is one or more of the following:

the port index corresponding to the $m^{th}$ SRS port is equal to the port index corresponding to the $n^{th}$ SRS port; or
the $m^{th}$ SRS port corresponds to a largest port index in the first SRS resource, and the $n^{th}$ SRS port corresponds to a largest or smallest port index in the second SRS resource; or
the $m^{th}$ SRS port corresponds to a smallest port index in the first SRS resource, and the $n^{th}$ SRS port corresponds to a smallest or largest port index in the second SRS resource.

7. The method according to any one of claims 1 to 6, wherein the SRS configuration message comprises N SRS resources, and a specific value of N is one or more of the following:

N=round up (y/x); or

$N=C_y^x$, wherein $C_y^x$ indicates a quantity of combinations of any x ports selected from y ports; or
N=round up (2*y/x-1); or
N=N1, wherein N1 is a quantity of port combinations that are of x ports for sending an SRS signal and that are reported by the terminal device, x, y, and N1 are positive integers, N is less than or equal to $C_y^x$, and N1 is less than or equal to $C_y^x$.

8. The method according to claim 7, wherein x is a quantity of ports supported by the terminal device for uplink SRS sending, y is a quantity of ports supported by the terminal device for downlink receiving, x and y are positive integers, and x is less than or equal to y.

9. The method according to claim 2, wherein the method comprises:
sending SRSs corresponding to N SRS resources, wherein the SRSs corresponding to the N SRS resources are used by a network device to obtain, based on the received SRSs, channel state measurement information corresponding to N2 SRS port combinations, and indicate, to a terminal, an antenna port combination for sending uplink data, each SRS port combination comprises x SRS ports, and N2 is greater than or equal to N and less than or equal to $C_y^x$.

10. The method according to claim 1, wherein the method further comprises:
receiving SRSs corresponding to N SRS resources, to obtain channel state measurement information of x1 SRS ports, wherein x1 is greater than or equal to x, and x1 is less than or equal to y.

11. The method according to claim 10, wherein the method further comprises:
obtaining, based on the channel state measurement information of the x1 SRS ports, channel state measurement information corresponding to N2 SRS port combinations, wherein each SRS port combination comprises x SRS ports, and N2 is greater than or equal to N and less than or equal to $C_y^x$.

12. The method according to claim 1, 10, or 11, wherein the method further comprises:
sending first indication information to the terminal, to indicate an antenna port combination used for sending uplink data.

13. The method according to claim 2 or 9, wherein the method further comprises:

receiving first indication information from the network device, to indicate the antenna port combination used for sending the uplink data; and
sending the uplink data based on the first indication information.

14. The method according to claim 12 or 13, wherein the first indication information comprises a first SRS port combination in the N2 SRS port combinations, to indicate the terminal to send the uplink data through an antenna port same as the first SRS port combination; or
the first indication information comprises x port indications of the x1 SRS ports, to indicate the terminal to send the uplink data through antenna ports corresponding to the x port indications, N2 is greater than or equal to N and less than or equal to $C_y^x$, x1 and x are positive integers, and x1 is greater than or equal to x.

15. A communication apparatus, comprising a processor, wherein the processor is coupled to a memory, the memory is configured to store a program or instructions, and when the program or the instructions are executed by the processor, the apparatus is enabled to perform the method according to any one of claims 1 to 14.

16. A computer-readable storage medium, wherein the computer-readable storage medium stores a computer program or instructions, and when the computer program or the instructions are executed, a computer is enabled to perform the method according to any one of claims 1 to 14.

17. A communication apparatus, wherein the communication apparatus comprises a processing module and an interface module, and is configured to implement the method according to any one of claims 1 to 14.

18. A communication system, wherein the communication system comprises a communication apparatus that performs the method according to claim 1 and a communication apparatus that performs the method according to claim 2.

SRS

Beam

Antenna port 2

Beam

Antenna
port 1

PUSCH

Beam

Antenna port 2

Beam

Antenna
port 1

FIG. 1

Network device 02

Terminal

Terminal 01

Terminal

Communication system

FIG. 2

Communication apparatus 300

Processor 301

Processor 307

CPU 0

CPU 0

CPU 1

CPU 1

Communication
line 302

Memory 304

Communication
interface 303

Output
device 305

Input device 306

FIG. 3

| Network device | Terminal |
|---|---|

401: The network device sends an SRS
configuration message to the terminal

402: The terminal receives the SRS
configuration message, and sends an
SRS on an SRS resource

403: The network device receives and
measures the SRS signal, determines an
uplink data port combination of the
terminal, and sends first indication
information to the terminal

404: The terminal sends uplink data to
the network device based on the first
indication information

FIG. 4

FIG. 5

FIG. 6

FIG. 7

FIG. 8

FIG. 9

Communication apparatus 1000

Interface module
1001

Receive

Send

Processing module
1002

FIG. 10

Apparatus 1100

Processor
1110

Transceiver
1130

Memory
1120

FIG. 11

FIG. 12

## INTERNATIONAL SEARCH REPORT

| International application No. |
|---|
| **PCT/CN2024/119481** |

| A. | CLASSIFICATION OF SUBJECT MATTER |
|---|---|

H04W72/0446(2023.01)i

According to International Patent Classification (IPC) or to both national classification and IPC

| B. | FIELDS SEARCHED |
|---|---|

Minimum documentation searched (classification system followed by classification symbols)

IPC:H04W, H04L, H04B

Documentation searched other than minimum documentation to the extent that such documents are included in the fields searched

Electronic data base consulted during the international search (name of data base and, where practicable, search terms used)

CNTXT, CNKI, VCN, DWPI, ENTXT, 3GPP: 探测参考信号, 监听参考信号, 侦听参考信号, SRS, 相同, 同一, 一样, 同样, 端口, 天线, 天线端口, SRS端口, 发送, 传输, 配置, 用途, 码本, 索引, 组合, same, antenna, port, transmit, configur+, usage, codebook, index, combin+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022083327 A1 (HUAWEI TECHNOLOGIES CO., LTD.) 28 April 2022 (2022-04-28) description, page 13, line 11-page 14, line 30, page 19, line 27-page 22, line 21, and page 48, line 6-page 55, line 2 | 1-18 |
| A | WO 2022205459 A1 (GUANGDONG OPPO MOBILE TELECOMMUNICATIONS CORP., LTD.) 06 October 2022 (2022-10-06) entire document | 1-18 |
| A | WO 2023274182 A1 (HUAWEI TECHNOLOGIES CO., LTD.) 05 January 2023 (2023-01-05) entire document | 1-18 |
| A | WO 2023152791 A1 (NTT DOCOMO, INC.) 17 August 2023 (2023-08-17) entire document | 1-18 |
| A | NOKIA et al. "Maintenance for Reference Signals and QCL" *3GPP TSG RAN WG1 Meeting #94bis, R1-1811405*, 12 October 2018 (2018-10-12), entire document | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 December 2024** | **23 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/119481** |

| Patent document cited in search report | | | Publication date (day/month/year) | Patent family member(s) | | | Publication date (day/month/year) |
| --- | --- | --- | --- | --- | --- | --- | --- |
| WO | 2022083327 | A1 | 28 April 2022 | CN | 114389651 | A | 22 April 2022 |
| WO | 2022205459 | A1 | 06 October 2022 | WO | 2022205797 | A1 | 06 October 2022 |
| | | | | CN | 116547935 | A | 04 August 2023 |
| WO | 2023274182 | A1 | 05 January 2023 | CN | 115567953 | A | 03 January 2023 |
| WO | 2023152791 | A1 | 17 August 2023 | | None | | |

Form PCT/ISA/210 (patent family annex) (July 2022)

**EP 4 770 232 A1**